# EUROPÄISCHE PATENTSCHRIFT

(11) **EP 1 813 915 B1**
(45) Veröffentlichungstag und Bekanntmachung des Hinweises auf die Patenterteilung: **30.03.2016**
(21) Anmeldenummer: 07100534.2
(22) Anmeldetag: 15.01.2007
(51) Int. Cl.: G01C 21/36

(54) **Verfahren zur Adresseingabe in ein Informationssystem und Informationssystem**
Method for entering addresses in an information system and information system
Procédé d'entrée d'adresse dans un système d'information et système d'information

(30) Priorität: 20.01.2006 DE 102006002739
(43) Veröffentlichungstag der Anmeldung: 01.08.2007
(73) Patentinhaber: ROBERT BOSCH GMBH, 70442 Stuttgart (DE)
(72) Erfinder: Duckeck, Ralf, 31137, Hildesheim (DE)

(56) Entgegenhaltungen:
- JP-A- 2002 116 042
- US-A- 6 112 153

## Beschreibung

### Stand der Technik

Die Erfindung geht von einem Verfahren zur Adresseingabe in ein Informationssystem nach der Gattung des unabhängigen Patentanspruchs aus.

In DE 100 03 737 A1 ist ein Fahrzeugnavigationssystem beschrieben, bei dem eine Adresseingabe zur Festlegung eines Navigationsziels vorgesehen ist. Bei diesem Fahrzeugnavigationssystem wird zunächst der Orts- oder Städtename, anschließend der Straßenname buchstabenweise über entsprechende Bedienelemente eingegeben. Hier wie auch bei tatsächlich realisierten Navigationssystemen, wie etwas den Geräten des Typs "TravelPilot" der Fa. Blaupunkt GmbH wird stets die Kenntnis des exakten Orts- oder Städtenamens vorausgesetzt.

Aus der JP 2002 116042 A ist ein Navigationsgerät bekannt, durch das ein Benutzer auf einer Route zu einem Ziel geführt wird und das mit einer Adress-Datenbank versehen ist. Um das Ziel durch Auswahl derjenigen Bereiche zu bestimmen, aus denen sich eine Stadt zusammensetzt, wird, wenn der Name der Stadt und danach der Name einer durch die Stadt verlaufenden Straße eingegeben wird, vom Navigationsgerät geprüft, ob die Straße durch mehrere Bereiche (Orte) der Stadt verläuft. Ist dies der Fall, werden die betreffenden Bereiche auf einem Bildschirm dargestellt, um so den Bereich anzugeben, der das durch die eingegebenen Städtenamen, Straßennamen und Bereichsnamen bestimmte Ziel enthält.

Bei manchen größeren Agglomerationen oder Großstädten ist es schwierig, den korrekten Ortsnamen einzugeben, dann ist ein Finden des passenden Ortes sehr schwer. Städte wie Paris oder Brüssel bestehen zwar im Kern aus Orten dieses Namens, die tatsächlich gesuchte Strasse liegt jedoch nicht in diesem Ort und ist daher auch nicht unter diesem Namen dort zu finden, obwohl man ihn dort sucht. In Paris können das Orte sein wie St. Ouen, St. Denis, Bobigny; für Brüssel Schaarbeek, Beaufort, Anderlecht. Dies gehört zwar alles zu den jeweiligen Orten, als Ortsfremder würde man eine spezifische Straße unter Paris oder Brüssel suchen, kann sie aber dort nicht finden, weil die Strasse tatsächlich z.B. in St. Ouen oder in Anderlecht liegt.

Selbst in näherer Umgebung ist es nicht immer einfach, den korrekten Ort für die Eingabe zu finden. Im Raum Hannover gibt es z. B. die Strasse "Pattenser Straße", diese liegt im Bereich der Ortschaft Rethen. Unter "Rethen" ist die Straße allerdings nicht zu finden, in Hannover auch nicht, nach längerem Suchen findet man dann, dass dieser Teil von Rethen zu Laatzen gehört, dort ist die Straße auch verzeichnet.

### Vorteile der Erfindung

Die Erfindung mit den Merkmalen des unabhängigen Patentanspruchs erleichtert die Adresseingabe in ein Informationssystem insbesondere für den Fall, dass der zweite Adressbezeichner, welcher eine übergeordnete Verwaltungseinheit zu dem mit dem ersten Adressbezeichner gekennzeichneten Datum bezeichnet, nicht zuverlässig bekannt ist.

Dies wird erfindungsgemäß erreicht mit einem Verfahren zur Adresseingabe in ein Informationssystem, wobei ein erster Adressbezeichner, beispielsweise Straßenname, und ein zweiter Adressbezeichner einer übergeordneten Verwaltungseinheit, beispielsweise Ortsname, eingegeben werden, wobei in einer Datenbank nach einem den eingegebenen Adressbezeichnern genügenden Eintrag gesucht wird, wobei bei Auffinden eines den eingegebenen Adressbezeichnern genügenden Eintrags dieser ausgewählt wird, welches sich dadurch auszeichnet, dass dass bei Nichtauffinden eines den eingegebenen Adressbezeichnern genügenden Eintrags in der Datenbank nach einem dem ersten Adressbezeichner genügenden Eintrag auch in solchen Verwaltungseinheiten gesucht wird, die der durch den zweiten Adressbezeichner bezeichneten übergeordneten Verwaltungseinheit räumlich benachbart sind und ein im Rahmen dieser Suche gefundener Eintrag, der nur dem ersten Adressbezeichner genügt, ausgewählt wird. Vorteilhaft wird ergänzend auch in solchen Verwaltungseinheiten gesucht,, die Unterverwaltungseinheiten dieser übergeordneten Verwaltungseinheit darstellen. Vorteilhaft wird ergänzend auch in solchen Verwaltungseinheiten gesucht, die diese übergeordnete Veraltungseinheit enthalten.

Das erfindungsgemäße Verfahren kann vorteilhaft zur Eingabe eines Navigationsziels in ein Fahrzeug- oder Fußgängernavigationssystem eingesetzt werden. Ist hier beispielsweise der Straßenname des Navigationsziels bekannt und auch ungefähr der Ort bzw. die Stadt, in dem bzw. der die Straße liegt, ermittelt das Navigationssystem automatisch die korrekte Adresse des Navigationsziels. Der erste Adressbezeichner kann dann ein Straßenname oder Name eines POI sein, der zweite Adressbezeichner ein Orts-, Städte- oder Stadteilnahme und die weitere Suche bei nicht übereinstimmendem Orts-, Stadte- oder Stadteilnahmen auf räumlich benachbarte Orte, Städte oder Stadtteile sowie bei Eingabe eines Stadtnamens zusätzlich auf deren Stadtteile und Stadtteile der benachbarten Städte und bei Eingabe eines Stadtteilnamens auf die übergeordnete Verwaltungseinheit und die benachbarten Stadteile ausgedehnt werden.

Im Falle des Auffindens mehrerer Einträge werden diese, vorzugsweise in Form einer Liste, zur Auswahl durch den Benutzer angeboten werden.

### Zeichnungen

Ausführungsbeispiele der Erfindung sind in den Figuren dargestellt und werden nachfolgend näher erläutert.

Es zeigen
- Figur 1: einen Kartenausschnitt zur Verdeutlichung des Verfahrens
- Figur 2: einen Ablaufplan des Verfahrens
- Figur 2A: eine detailliertere Darstellung einer besonders bevorzugten Ausführungsform des erfindungsgemäßen Verfahrens
- Figur 3: ein Blockschaltbild eines Navigationssystems als Beispiel für ein Gerät zur Durchführung des erfindungsgemäßen Verfahrens.

### Beschreibung der Ausführungsbeispiele

Die Erfindung wird nachfolgend am Beispiel eines Navigationssystems, als Beispiel für ein erfindungsgemäßes Informationssystem, hier zur Information eines Fahrzeugführers oder eines Fußgängers über eine einzuschlagende Route zu einem bestimmten Ziel, beschrieben. Dies ist jedoch nicht im Sinne einer Beschränkung zu verstehen. Vielmehr ist die Erfindung auch bei anderweitigen Informationssystemen anwendbar.

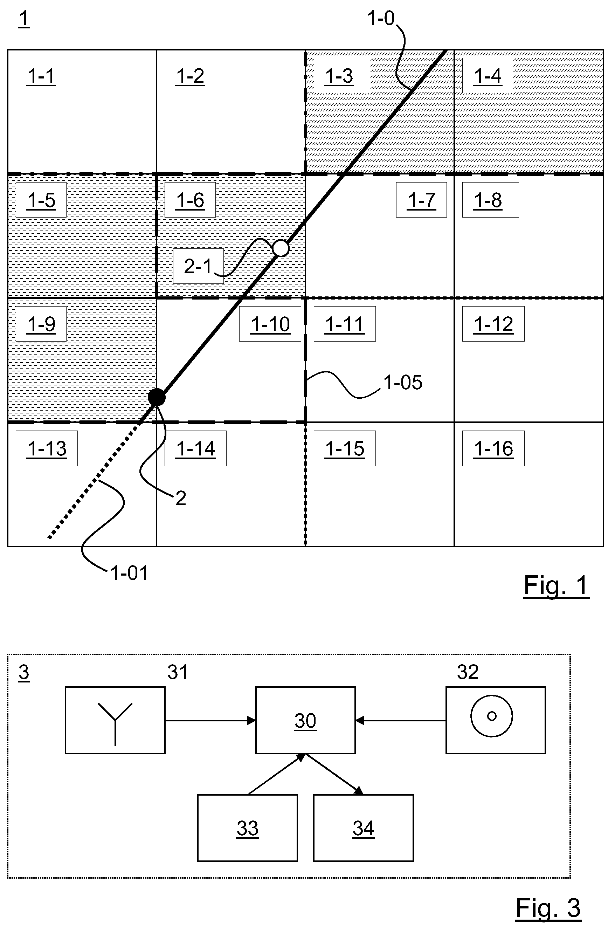

Figur 1 zeigt beispielhaft einen Kartenausschnitt 1 einer digitalen Landkarte. Der dargestellte Ausschnitt umfasst geografische Kacheln 1-1, 1-2, 1-3, 1-4, 1-5, 1-6, 1-7, 1-8, 1-9, 1-10, 1-11, 1-12, 1-13, 1-14, 1-15 und 1-16. Die Kacheln 1-1 und 1-2 gehören zur Gemeinde Schwieberdingen im Landkreis Ludwigsburg, die Kacheln 1-3 und 1-4 zur Stadt Kornwestheim im Landkreis Ludwigsburg, die Kacheln 1-5, 1-9 und 1-10 gehören zur Stadt Korntal-Münchingen im Landkreis Ludwigsburg. Die übrigen Kacheln 1-6, 1-7, 1-8, 1-11, 1-12, 1-13, 1-14, 1-15 und 1-16 gehören zur Stadt Suttgart, wobei 1-6, 1-7 und 1-8 zum Stadtteil Stammheim, die Kacheln 1-11, 1-12, 1-15 und 1-16 zum Stadtteil Zuffenhausen und die Kacheln 1-13 und 1-14 zum Stadtteil Weilimdorf gehören. Die Stadtgrenze 1-05 trennt die Stadt Stuttgart vom Landkreis Ludwigsburg. Über die Kacheln 1-3, 1-7, 1-6, 1-10, 1-9 und 1-13 hinweg führt eine Straße 1-0, die über die genannten Kacheln 1-3, 1-7, 1-6, 1-10, 1-9 hinweg und auch über die Stadtgrenze 1-05 hinweg denselben Namen "Solitudeallee" aufweist. Erst beim Übergang von Kachel 1-9 nach Kachel 1-13, also an der Grenze von Korntal-Münchingen zu Stuttgart-Weilimdorf ändert sich der Straßenname in "Solitudestraße" - Abschnitt 1-01.

Einem nicht ortskundigen Fahrer ist nun beispielsweise der Straßenname "Solitudeallee" und dazu eine Hausnummer seines Fahrziels 2 bekannt und daneben, dass diese Anschrift 2 im Bereich des Großraums Stuttgart Nord liegt. Das Navigationsziel 2 liegt beispielsweise in Korntal-Münchingen. Der exakte Ortsname ist dem Fahrzeugführer jedoch nicht bekannt.

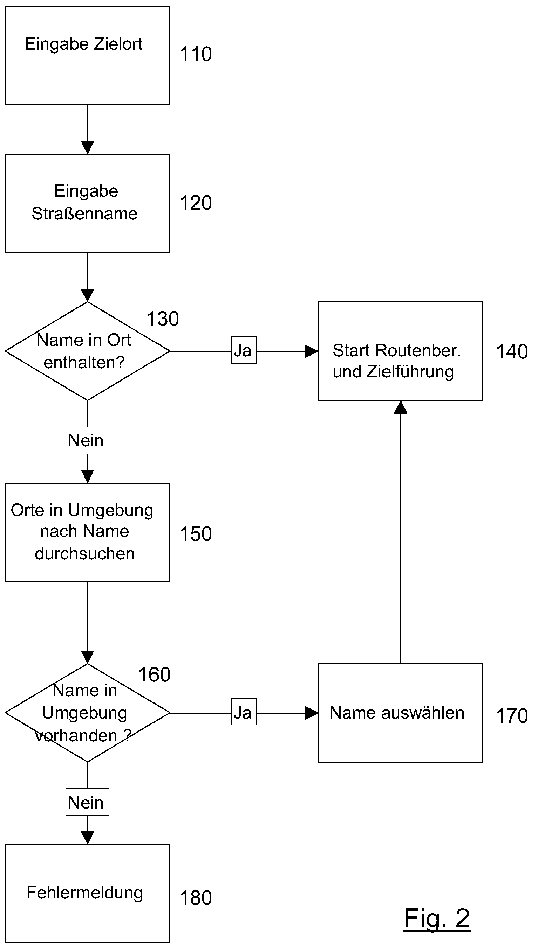

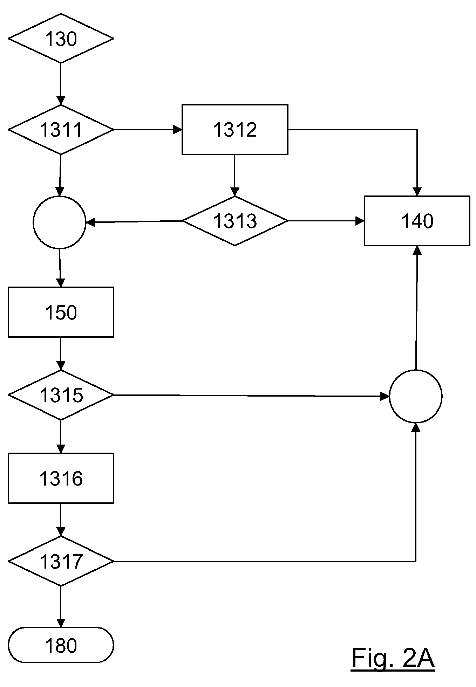

Zur Eingabe eines Navigationsziels fragt das Navigationssystem nun zunächst den Orts- bzw. Städtenamen des Navigationsziels ab. Der Nutzer gibt hier beispielsweise "Stuttgart" ein (Schritt 110 in Figur 2). Anschließend wird der Straßenname und die Hausnummer abgefragt. Hier gibt der Nutzer "Solitudeallee" und die ihm bekannte Hausnummer ein (Schritt 120).

Darauf wird in der gespeicherten digitalen Karte nach einem Eintrag, also einer Anschrift, gesucht, deren Daten mit dem ersten Adressbezeichner, dem eingegebenen Straßennamen "Solitudeallee" und Hausnummer, und dem zweiten Adressbezeichner, dem Ortsnamen "Stuttgart", übereinstimmt (Schritt 130). Wäre in der Datenbank, also der digitalen Karte, ein passender Eintrag vorhanden, also ein Punkt mit dem Ortsnamen "Stuttgart", dem Straßennamen "Solitudeallee" und der passenden Hausnummer, würde im folgenden Schritt 140 die Routenberechnung und nachfolgend die Zielführung zu diesem Punkt als Zielpunkt in an sich bekannter Weise durchgeführt.

Beim hier beschriebenen Beispiel existiert jeodch kein solcher Punkt in der Kartendatenbasis, da die eingegebene Hausnummer der "Solitudeallee" nicht auf dem Stadtgebiet von Stuttgart liegt. Erfindungsgemäß wird die Suche nun in Schritt 150 auf die angrenzenden Stadt- bzw- Verwaltungsgebiete ausgedehnt. Im vorliegenden Fall grenzt an das Stadtgebiet von Stuttgart der Landkreis Ludwigsburg. Folglich wird nun nach einer passenden Anschrift mit dem eingegebenen Straßennamen "Solitudeallee" und der eingegebenen Hausnummer im Landkreis Ludwigsburg gesucht. Wird ein solcher passender Eintrag in der Datenbank gefunden (Prüfung in Schritt 160), im vorliegenden Fall liegt die eingegebene Anschrift in Korntal-Münchingen, wird dieser gefundene Eintrag als Navigationsziel ausgewählt (Schritt 170) und nachfolgend die Routenberechnung in Zielführung zu diesem Punkt angestoßen (Schritt 140).

Wird hingegen auch im Umkreis von Stuttgart kein passender Eintrag mit dem Straßennamen "Solitudeallee" und der eingegebenen Hausnummer gefunden, wird die Suche abgebrochen und eine Fehlermeldung ausgegeben (Schritt 180).

Oftmals ist einem Nutzer zwar ein Ortsname des Navigationsziels bekannt, etwa im folgenden Beispiel der Ortsname "Stammheim", in dem eine andere Anschrift 2-1 auf der "Solitudeallee" liegt. Die Suche in der Datenbank nach dem ersten Adressbezeichner "Solitudeallee" in Verbindung mit dem zweiten Adressbezeichner "Stammheim" ergibt jedoch keinen exakt übereinstimmenden Treffer, da die "Solitudeallee" in der Datenbank nicht dem Stadtteilnamen "Stammheim", sondern der Stadt "Stuttgart" als übergeordneter Verwaltungseinheit zugeordnet ist (Schritt 130 in Figur 3). Gemäß der hier beschriebenen vorteilhaften Ausführungsform der Erfindung wird daher im nächsten Suchschritt die Suche auf denjenigen Ort ausgedehnt, der die übergeordnete Verwaltungseinheit zu dem eingegebenen Ortsnamen bildet, also hier die Stadt "Stuttgart" als übergeordnete Verwaltungseinheit für den Stadtteil "Stammheim". Dazu wird in Schritt 1311 überprüft, ob es sich bei dem eingegebenen zweiten Adressbezeichner um einen Stadtteilnamen einer Stadt handelt. Dies ist im Fall "Stammheim" der Fall, die zugehörige Stadt ist "Stuttgart". In Schritt 1312 wird der Stadtname "Stuttgart" zugeordnet und sodann die Suche nach einem exakten Treffer mit der eingegebenen Hausnummer und Straßennamen zur übergeordneten Verwaltungseinheit, nämlich der Stadt Stuttgart fortgesetzt. Wird ein exakter Treffer erzielt (Prüfung in Schritt 1313), folgt die Routenberechnung und Zielführung zu der ermittelten Anschrift (Schritt 140). Im vorliegenden Fall würde also die Route nach Stuttgart (Ortsteil Stammheim), Solitudeallee, [eingegebene Hausnummer] berechnet.

Andernfalls wird nach Straßen mit dem eingegebenen Straßennamen und der eingegebenen Hausnummer in den umgebenden Städten, also hier der Gemeinde Schwieberdingen (1-1, 1-2), der Stadt Korntal-Münchingen (1-5, 1-9. 1-10) und der Stadt Kornwestheim (1-3, 1-4) gesucht (Schritt 150). Würde hier ein exakter Treffer erzielt (Prüfung in Schritt 1315), würde dieser als Navigationsziel übernommen und die Route dorthin berechnet (Schritt 140). Andernfalls würde die Suche auf die Stadtteile der umgebenden Städte bzw. Gemeinden ausgeweitet - im Falle Schwieberdingen weiterhin auf Schwieberdingen, im Falle Korntal-Münchingen auf Korntal und Münchingen und im Falle der Stadt Kornwestheim auf deren Stadtteile 1-3, 1-4 usw (Schritt 1316). Würde der eingegebene Straßenname und die eingegebene Hausnummer in einem der Stadteile der umgebenden Städte gefunden (Prüfung in Schritt 1317), würden diese Daten als Navigationsziel übernommen und die Routenberechnung damit durchgeführt (Schritt 140).

Bei Eingabe des Straßennamens kann das Navigationssystem überprüfen, ob der Name in der Datenbasis unter dem angegebenen Ort zu finden ist. Ist das nicht der Fall, gibt das Navigationssystem alle Orte im Umkreis um den gewünschten Ort an, in dem dieser Straßenname vorkommt. Bei Eingabe Hannover würde dann z. B. Laatzen angegeben werden, wenn vorher "Pattenser Straße" gewählt wurde. Bei Brüssel und "Avenue de Vilvorde" würde "Schaarbeek" als möglicher Ort angegeben werden. Damit ist sofort eine Zuordnung zum richtigen Ort möglich. Im Falle einer Mehrdeutigkeit ist bevorzugt vorgesehen, dass dann alle Navigationsziele, mit den eingegebenen Parametern zur Auswahl durch den Benutzer in einer Liste auf einer Anzeige ausgegeben werden.

Die Erfindung ist grundsätzlich auch bei anderen Informationssystemen als dem hier beschriebenen Navigationssystem anwendbar. Beispielsweise könnten in der Datenbank auch Musikstücke nach Titel als erstem Adressbezeichner und nach Interpret oder Künstler als übergeordnetem weiteren Adressbezeichner abgespeichert sein. Anderweitige Anwendungsszenarien sind ebenfalls vorstellbar und liegen im Bereich der Erfindung.

Figur 3 zeigt ein Blockschaltbild eines erfindungsgemäßen Informationssystems 3 zur Durchführung des vorbeschriebenen Verfahrens, hier am Beispiel eines Fahrzeugnavigationssystems. Dieses umfasst eine zentrale Steuerung 30, bevorzugt einen programmgesteuerten Mikrocomputer, in dem das erfindungsgemäße Verfahren implementiert ist. Die Steuerung ist mit Eingabemitteln 33, vorzugsweise einer Tastatur verbunden, über die Daten, insbesondere die Adressbezeichner eingegeben werden. Des weiteren ist die Steuerung 30 mit Ausgabemitteln 34, vorzugsweise in Form einer Anzeige und/oder einer Sprachausgabe, verbunden, die der Ausgabe von Zielführungshinweisen im Rahmen einer Zielführung dient. Daneben dienen die Ausgabemittel einer Benutzerführung im Rahmen von Eingabeprozeduren. An die Steuerung ist ferner eine Datenbank 32 angeschlossen. Im Falle des Fahrzeugnavigationssystems sind darin digitale Kartendaten abgelegt, auf die sowohl zur Navigationszieleingabe, als auch zur Positionsbestimmung und Routenberechnung zugegriffen wird. Ortungsmittel 31 dienen der Positionsbestimmung. Die beschriebene Anordnung 3 bildet die Hardware-Basis zur Durchführung des erfindungsgemäßen Verfahrens.

## Patentansprüche

1. Verfahren zur Adresseingabe in ein Informationssystem,
wobei ein erster Adressbezeichner, beispielsweise Straßenname, und ein zweiter Adressbezeichner einer übergeordneten Verwaltungseinheit, beispielsweise Ortsname, eingegeben werden,
wobei in einer Datenbank nach einem den eingegebenen Adressbezeichnern genügenden Eintrag gesucht wird,
wobei bei Auffinden eines den eingegebenen Adressbezeichnern genügenden Eintrags dieser ausgewählt wird,
**dadurch gekennzeichnet,**
**dass** bei Nichtauffinden eines den eingegebenen Adressbezeichnern genügenden Eintrags in der Datenbank nach einem dem ersten Adressbezeichner genügenden Eintrag auch in solchen Verwaltungseinheiten gesucht wird, die der durch den zweiten Adressbezeichner bezeichneten übergeordneten Verwaltungseinheit räumlich benachbart sind, und
ein im Rahmen dieser Suche gefundener Eintrag, der nur dem ersten Adressbezeichner genügt, ausgewählt wird.

2. Verfahren nach Anspruch 1, **dadurch gekennzeichnet, dass** bei Nichtauffinden eines den eingegebenen Adressbezeichnern genügenden Eintrags in der Datenbank nach einem dem ersten Adressbezeichner genügenden Eintrag ergänzend auch in solchen Verwaltungseinheiten gesucht wird, die Unterverwaltungseinheiten dieser übergeordneten Verwaltungseinheit darstellen.

3. Verfahren nach Anspruch 1 oder 2, **dadurch gekennzeichnet, dass** bei Nichtauffinden eines den eingegebenen Adressbezeichnern genügenden Eintrags in der Datenbank nach einem dem ersten Adressbezeichner genügenden Eintrag ergänzend auch in solchen Verwaltungseinheiten gesucht wird, die diese übergeordnete Verwaltungseinheit enthalten.

4. Verfahren nach einem der vorhergehenden Ansprüche zur Zieleingabe in einem Navigationssystem, insbesondere Fahrzeug- oder Fußgängernavigationssystem.

5. Verfahren nach einem der vohergehenden Ansprüche, **dadurch gekennzeichnet, dass** der erste Adressbezeichner ein Straßenname oder Name eines POI ist, dass der zweite Adressbezeichner ein Orts-, Städte- oder Stadteilnahme ist und dass die weitere Suche bei nicht übereinstimmendem Orts- , Stadte- oder Stadteilnahmen auf räumlich benachbarte Orte, Städte oder Stadtteile sowie bei Eingabe eines Stadtnamens zusätzlich auf deren Stadtteile und Stadtteile der benachbarten Städte und bei Eingabe eines Stadtteilnamens auf die übergeordnete Verwaltungseinheit und die benachbarten Stadteile ausgedehnt wird.

6. Verfahren nach einem der vorhergehenden Ansprüche, **dadurch gekennzeichnet, dass** im Falle des Auffindens mehrerer Einträge diese, vorzugsweise in Form einer Liste, zur Auswahl durch den Benutzer angeboten werden.

7. Informationssystem, insbesondere Navigationssystem, eingerichtet zur Adresseingabe nach einem Verfahren nach einem der vorhergehenden Ansprüche.

## Claims

1. Method for entering addresses in an information system,
wherein a first address designator, for example a street name, and a second address designator of a superordinate administrative unit, for example a place name, are entered,
wherein a search is carried out in a database for an entry which complies with the entered address designators,
wherein, if an entry which complies with the entered address designators is found, this entry is selected,
**characterized in that**,
if an entry which complies with the entered address designators is not found in the database, a search is also carried out for an entry which complies with the first address designator in those administrative units which are spatially adjacent to the superordinate administrative unit designated by the second address designator, and
an entry which is found during this search and complies with only the first address designator is selected.

2. Method according to Claim 1, **characterized in that**, if an entry which complies with the entered address designators is not found in the database, a search is additionally also carried out for an entry which complies with the first address designator in those administrative units which are administrative subunits of this superordinate administrative unit.

3. Method according to Claim 1 or 2, **characterized in that**, if an entry which complies with the entered address designators is not found in the database, a search is additionally also carried out for an entry which complies with the first address designator in those administrative units which contain this superordinate administrative unit.

4. Method according to one of the preceding claims for entering destinations in a navigation system, in particular a vehicle or pedestrian navigation system.

5. Method according to one of the preceding claims, **characterized in that** the first address designator is a street name or name of a POI, **in that** the second address designator is a place name, a city name or a district name, and **in that**, in the case of place, city or district names which do not match, the further search is expanded to spatially adjacent places, cities or districts and, if a city name is entered, additionally to its districts and districts of the adjacent cities and, if a district name is entered, to the superordinate administrative unit and the adjacent districts.

6. Method according to one of the preceding claims, **characterized in that**, if a plurality of entries are found, they are offered for selection by the user, preferably in the form of a list.

7. Information system, in particular navigation system, set up to enter addresses in accordance with a method according to one of the preceding claims.

## Revendications

1. Procédé de saisie d'adresse dans un système d'information,
dans lequel un premier descripteur d'adresse, par exemple un nom de rue, et un deuxième descripteur d'adresse d'une unité administrative d'ordre supérieur, par exemple un nom de lieu, sont saisis,
dans lequel une recherche est effectuée dans une base de données conformément à une entrée correspondant à l'un des descripteurs d'adresse,
dans lequel, lorsqu'une entrée correspondant à l'un des descripteurs d'adresse fournis en entrée est trouvée, celle-ci est sélectionnée,
**caractérisé en ce que**, lorsqu'une entrée correspondant à l'un des descripteurs d'adresse fournis en entrée n'est pas trouvée dans la base de données conformément à une entrée correspondant au premier descripteur d'adresse, une recherche est également effectuée dans des unités administratrices qui sont spatialement voisines de l'unité administrative d'ordre supérieur identifiée par le deuxième descripteur d'adresse, et une entrée trouvée dans le cadre de ladite recherche et qui correspond au premier descripteur d'adresse est sélectionnée.

2. Procédé selon la revendication 1, **caractérisé en ce que**, lorsqu'une entrée correspondant aux descripteurs d'adresses fournis en entrée n'est pas trouvée dans la base de données conformément à une entrée correspondant au premier descripteur d'adresse, une recherche est également effectuée de manière complémentaire dans des unités administratives qui représentent des unités administratives inférieures à ladite unité administrative d'ordre supérieur.

3. Procédé selon la revendication 1 ou 2, **caractérisé en ce que**, lorsqu'une entrée correspondant à l'un des descripteurs d'adresse fournis en entrée n'est pas trouvée dans la base de données conformément à une entrée correspondant au premier descripteur d'adresse, une recherche est également effectuée de manière complémentaire dans des unités administratives qui contiennent ladite unité administrative d'ordre supérieur.

4. Procédé selon l'une quelconque des revendications précédentes, destiné à saisir une destination dans un système de navigation, notamment un système de navigation pour véhicules ou piétons.

5. Procédé selon l'une quelconque des revendications précédentes, **caractérisé en ce que** le premier descripteur d'adresse est un nom de rue ou un nom d'un point d'intérêt, **en ce que** le deuxième descripteur d'adresse est un nom de lieu, de ville ou de quartier et **en ce que** l'autre recherche, lorsque les noms de lieu, de ville ou de quartiers ne concordent pas, est étendue à des lieux, des villes ou des quartiers spatialement voisins, et lors de la saisie d'un nom de ville, la recherche est en outre étendue aux quartiers de ladite ville et à des quartiers des villes voisines et, lors de la saisie d'un nom de quartier, la recherche est étendue à l'unité administrative d'ordre supérieur et aux quartiers voisins.

6. Procédé selon l'une quelconque des revendications précédentes, **caractérisé en ce que**, dans le cas où plusieurs entrées sont trouvées, celles-ci sont de préférence proposées sous la forme d'une liste permettant une sélection par l'utilisateur.

7. Système d'information, notamment système de navigation, conçu pour la saisie d'adresses conformément à un procédé selon l'une quelconque des revendications précédentes.
